# EUROPEAN PATENT APPLICATION

(11) **EP 3 904 165 A1**
(43) Date of publication of application: **03.11.2021**
(21) Application number: 21171367.2
(22) Date of filing: 29.04.2021
(51) Int. Cl.: B60R 25/102

(54) **VEHICLE TRACKING DEVICE**

(30) Priority: 30.04.2020 GB 202006421
(71) Applicant: Lockheed Technology Ltd, Redhill RH1 1QZ (GB)
(72) Inventor: Guodong, Li, Epsom, KT19 8AP (GB)
(74) Representative: Dainty, Katherine Louise

(57) **Abstract**

A vehicle tracking device comprises a wireless communication unit configured to wirelessly communicate with an external device; a GPS unit configured to determine positional information of the vehicle tracking device; a vibration determination unit configured to determine that a vibration is detected in response to receiving a signal corresponding to an external vibration; a control unit configured to control the vehicle tracking device; a power input unit configured to receive power from a power source and to supply power to each of the wireless communication unit, the GPS unit, the vibration determination unit, and the control unit; wherein, in response to a switch off signal received via the wireless communication unit, the control unit controls the power input unit to enter a switched off mode and to switch off supply of power to at least the wireless communication unit; and wherein when the vehicle tracking device is in the switched off state, in response to the power input unit receiving an applied voltage above a predetermined voltage threshold, the power input unit is configured to supply power to the wireless determination unit.

## Description

### Field

This specification relates to an information processing device, such as a vehicle tracking device, for example. The device is capable of GPS tracking and wireless communication.

### Background

Tracking devices may be used in anti-theft devices to locate a stolen object such as a bike, for example. A tracking device may identify the position of the device using GPS, and send position information to an external device such as a server and/or a mobile phone. Some devices may send position information to an external device by Bluetooth, GSM, or according to an IoT protocol.

### Summary

In one aspect there is provided a vehicle tracking device comprising a wireless communication unit configured to wirelessly communicate with an external device; a GPS unit configured to determine positional information of the vehicle tracking device;
a vibration determination unit configured to determine that a vibration is detected in response to receiving a signal corresponding to an external vibration; a control unit configured to control the vehicle tracking device;
a power input unit configured to receive power from a power source and to supply power to each of the wireless communication unit, the GPS unit, the vibration determination unit, and the control unit; and wherein, in response to a switch off signal received via the wireless communication unit, the control unit controls the power input unit to enter a switched off mode and to switch off supply of power to at least the wireless communication unit; and wherein when the vehicle tracking device is in the switched off state, in response to the power input unit receiving an applied voltage above a predetermined voltage threshold, the power input unit is configured to supply power to the wireless determination unit.

In response to the applied voltage being above the predetermined voltage threshold, the power input unit may be configured to further supply power to at least the wireless communication unit.

In response to the switch off signal, the control unit may control the power input unit to switch off supply to the GPS unit, the vibration unit and the control unit such that all the units of the vehicle tracking device are switched off.

In a power saving mode of the vehicle tracking device, the control unit controls the power input unit to supply power to at least the vibration determination unit and the control unit, and the control unit controls the power input unit to switch off supply of power to the wireless communication unit.

In a work mode, the control unit controls the power input unit to supply power to at least the wireless communication unit and the control unit.

In the power saving mode, in response to the vibration determination unit determining that a vibration is detected, the control unit may control the vehicle tracking device to switch from the power saving mode to the work mode.

In response to the vehicle tracking device switching to the work mode after the vibration determination unit determines that a vibration is detected, the control unit may be configured to control the wireless communication unit to transmit an authentication request to the external device.

The control unit may control the power input unit to supply power to the GPS unit, and wherein, in response to an authentication response not being received from the external device within a predetermined time period, the control unit controls the GPS unit to determine whether the position of the vehicle tracking device moves outside of a predetermined radius, and in response to determining that the position of the vehicle tracking device has moved outside of the predetermined radius, the control unit is configured to generate an alarm command to cause an alarm to activate.

In response to determining that the position of the vehicle tracking device has moved outside of the predetermined radius, the control unit may be configured to control the wireless communication unit to transmit an alarm notification to the external device, via a server.

In the power saving mode, the control unit may control the power supply unit to switch off supply of power to the GPS unit in response to the GPS unit receiving no GPS signal for a predetermined time threshold.

The wireless communication unit may comprise: a mobile communication unit configured to wirelessly communicate with the external device via a server over a mobile network, and a Bluetooth unit configured to authenticate communication with the external device and wirelessly communicate with the external device via Bluetooth when the external device is within a predetermined distance of the vehicle tracking device.

In the work mode, in response to receiving a pairing request from the external device, the control unit may control the wireless communication unit to transmit an authentication notification to the server, and in response to receiving an acknowledgement notification from the server, the control unit may control the wireless communication unit to establish Bluetooth communication with the external device.

In the work mode, in response to the Bluetooth unit determining that the external device is outside a predetermined range, the control unit maybe configured to control the vehicle tracking device to switch from the work mode to the power saving mode.

In response to the applied voltage being above the predetermined voltage threshold, the power input unit may be configured to further supply power to at least the wireless communication unit.

In response to the switch off signal, the control unit may control the power input unit to switch off supply to the GPS unit, the vibration unit and the control unit such that all the units of the vehicle tracking device are switched off.

In another aspect there is provided a method of controlling a vehicle tracking device, the vehicle tracking device comprising a wireless communication unit configured to wirelessly communicate with an external device, a GPS unit configured to determine positional information of the vehicle tracking device, a vibration determination unit configured to determine that a vibration is detected in response to receiving a signal corresponding to an external vibration, a control unit for controlling the vehicle tracking device, and a power input unit configured to receive power from a power source and to supply power to each of the wireless communication unit, the GPS unit, the vibration determination unit, and the control unit, the method comprising:
receiving a switch off signal via a wireless communication unit;
controlling the vehicle tracking device to enter a switched off mode and to switch off supply of power to at least the wireless communication unit; and
receiving an applied voltage above a predetermined voltage threshold; and supplying power to the wireless determination unit in response to receiving the applied voltage.

The method may further comprise in response to the applied voltage being above the predetermined voltage threshold, the power input unit is configured to further supply power to at least the wireless communication unit.

The method may further comprise in response to the switch off signal, the control unit controls the power input unit to switch off supply to the GPS unit, the vibration unit and the control unit such that all the units of the vehicle tracking device are switched off.

The method may further comprise in a power saving mode of the vehicle tracking device: controlling the power input unit to supply power to at least the vibration determination unit and the control unit; and controlling the power input unit to switch off supply of power to the wireless communication unit; and in a work mode of the vehicle tracking device: controlling the power input unit to supply power to at least the wireless communication unit and the control unit.

The method may further comprise controlling the vehicle tracking device to switch to the work mode in response to the vibration determination unit determining that a vibration is detected; and transmitting an authentication request to an external device in response to the vehicle tracking device switching to the work mode from the power saving mode.

The method may further comprise determining, in response to an authentication response not being received from the external device within a predetermined time period, whether a position of the vehicle tracking device moves outside of a predetermined radius; and generating, in response to determining that the position of the vehicle tracking device has moved outside of the predetermined radius, an alarm command to cause an alarm to activate; and, transmitting an alarm notification to the external device via a server, in response to determining that the position of the vehicle tracking device has moved outside of the predetermined radius.

The method may further comprise wirelessly communicating with the external device via a server over a mobile network; and authenticating communication with the external device via Bluetooth when the external device is within a predetermined distance of the vehicle tracking device.

The method may further comprise transmitting an authentication notification to the server in response to receiving a pairing request via Bluetooth from the external device; receiving an acknowledgement notification from the server; and establishing Bluetooth communication with the external device in response to receiving the acknowledgement notification.

The method may further comprise switching from the work mode to the power saving mode in response to determining that the external device is outside a predetermined range.

### Brief Description of Drawings

Embodiments of the invention will now be described, by way of example only, with reference to the accompanying drawings, in which:
Figure 1 illustrates a block diagram of an information processing device according to embodiments of the present invention;
Figure 2 illustrates a flow diagram of the operations of the information processing device according to embodiments of the present invention;
Figure 3 illustrates a flow diagram of the operations of the information processing device in its various different operation modes according to embodiments of the present invention;
Figure 4 illustrates an example of the information processing device communicating with external devices and a server according to embodiments of the present invention.

### Detailed description

The present specification describes an information processing device, such as a tracking and/or anti-theft device. The information processing device referred to herein may be a vehicle tracking device, for example. The information processing device includes, for example, one or more processors configured to execute instructions to cause performance of a number of functional tasks. In some examples, the information processing device is a chipset. The chipset includes different units for causing execution of respective functional tasks. The information processing device can be installed at an object such as a vehicle, and in particular a bike, for example. For example, the information processing device can be installed at a component of the bike, or an accessory of the bike, for example, a water bottle cage.

Conventional tracking devices typically use global positioning systems (GPS) to determine a device's position and upload to a server. To reduce battery consumption, the position information may be uploaded according to a predetermined schedule.

The present specification describes an information processing device which provides real-time positioning information while still maintaining low power consumption. As set out in more detail below, the information processing device may be able to communicate to one or more external devices, such as a mobile phone or a computer or any smart devices, via Bluetooth or NFC. The information device may also communicate to a server via suitable wireless networks. The information processing device maybe installed at an object, for example, a vehicle such as a bike. The information processing device may be capable of using the positioning information as well as a vibration determination unit to determine accurately whether the object that the information processing device is installed at is being stolen and alert a user of the information processing device. The information processing device may be installed at the object before a sale. It may record information such as date of leaving the manufacture's factory, and date of sale. The information processing device may also record usage information such as mileage information e.g. of a bike, any damages which result in a substantial vibration to the object, lost and found information, repair information and number of previous owners. These information may be used for re-sale purposes of the object. The information processing device may allow manufacturers or retailors to download and/or study usage information of the object and/or the device with the users' consent for improvement of the performance of the device and/or object, as well as provide better after-sale services and a platform for users to communicate with each other.

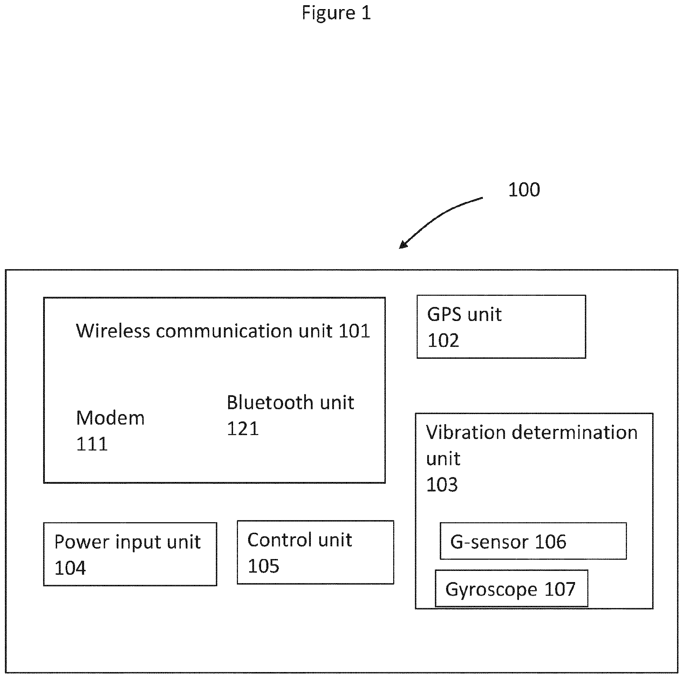

Referring now to Figure 1, the information processing device 100 comprises a wireless communication unit 101 configured to wirelessly communicate with an external device. The wireless communication unit 101 may comprise a Bluetooth unit 121. The Bluetooth unit 121 is configured to communicate with an external device, such as a mobile phone, a smart wrist band or a smart helmet for example, via Bluetooth wireless communication protocol. The Bluetooth unit 121 is capable of transmitting and receiving Bluetooth signals to the external device. The wireless communication unit may alternatively or additionally use other wireless connection techniques (not shown in the figure), for example Near Field Communication (NFC) or Radio-Frequency Identification (RFID). For example, the wireless communication unit may comprise an NFC unit as an alternative to a Bluetooth unit 121. The wireless communication unit 101 may additionally comprise a mobile network communication unit 111. In some example, the mobile communication unit is a modem 111 configured to wirelessly communication with the external device over a mobile network. For example, the mobile communication unit 111 may be a GSM unit configured to communicate over the 2G mobile network. However, the mobile communication unit 111 may be configured to wirelessly communicate over any other suitable mobile network such as 3G, 4G, eMTC, NB-IoT, 5G or Starlink network. The skilled person will recognise that the mobile communication unit 111 may communicate over any suitable mobile network.

The information processing device 100 also comprises a GPS unit 102 configured to determine positional information of the information processing device 100. The GPS unit 102 is, for example, connected to an external GPS antenna. The GPS antenna receives signals from GPS satellites and relays the signals to the GPS unit 102. The signals include position information from which the GPS unit 102 is configured to calculate the position of the information processing device 100. The GPS unit 102 may be initialised when the information processing device 100 is turned on by performing a time calibration between the GPS unit 102 and control unit 105.

The information processing device 100 also comprises a vibration determination unit 103 configured to determine that a vibration is detected in response to receiving a signal corresponding to an external vibration. For example, the vibration determination unit 103 may comprise a 3D accelerometer, or "G -sensor 106" which senses movement of the information processing device 100. For example, when the information processing device 100 is installed at an object such as a vehicle, and in particular a bike, the vibration determination unit 103 may determine movement of the bike. The vibration determination unit 103 may additionally comprise, or be connected to a gyroscope 107 (for example, a six-axis gyro sensor) which measures the orientation and angular velocity of the information processing device 100.

Additionally/alternatively the vibration determination unit may comprise circuitry which receives a signal from a vibration sensor which may be part of the information processing device 100, or which may be external to the information processing device 100. The vibration determination unit 103 may be configured to determine that a vibration is detected if it detects a vibration above a predetermined vibration threshold.

The information processing device 100 also comprises a power input unit configured to receive power from a power source and to supply power to each of the wireless communication unit 101, the GPS unit 102, and a vibration determination unit 103.

The information processing device 100 also comprises control unit 105 configured to control the information processing device 100. The control unit 105 may comprise, for example, a processing unit configured to execute instructions stored on a memory. The control unit 105 may comprise the memory, or maybe configured to control the memory. The control unit 105 comprises, for example, a microprocessor. The control unit 105 controls each of the wireless communication unit 101, GPS unit 102, vibration determination unit 103, and power input unit 104 to perform respective functions.

The information processing device 100 is operable in a number of different modes. For example, the information processing device 100 can operate in a work mode in which the control unit 105 controls the power input unit to supply power to each of the wireless communication unit 101, the GPS unit 102, and the vibration determination unit 103. The information processing device 100 may be operable in a number of work modes, depending on the circumstances, as will be described in more detail below. In general, in the work mode, the information processing device 100 is capable of receiving and transmitting communication wirelessly. That is, the information processing device 100 is capable of transmitting and receiving information via at least one of the Bluetooth unit 121 and the mobile communication unit 111.

The information processing device 100 can also operate in a power saving mode. In the power saving mode, the control unit 105 controls the power input unit to supply power to the vibration determination unit 103 and the control unit 105, and to switch off power to the wireless communication unit 101. In some examples, the control unit also control the power input unit to switch off power to the GPS unit 102. Accordingly, in the power saving mode, the wireless determination unit and GPS unit 102 do not operate. Therefore, power consumption can be reduced in the power saving mode by preventing the power from being supplied to the wireless communication unit 101 and GPS unit 102.

In some examples, the control unit 105 may control the power input unit to supply power to the GPS unit 102 while in the power saving mode. In some examples, the GPS unit 102 may receive power while a GPS signal is being received. The control unit 105 may be configured to switch off power supplied to the GPS unit if the GPS unit 102 does not receive a GPS signal for a predetermined length of time.

In some examples, the wireless communication unit 101 is configured to wirelessly communicate with the external device via a server 401. That is, the wireless communication unit 101 may comprise the mobile communication unit 111 configured to communicate with a server 401over a mobile network, for example, 2G, 3G, 4G, eMTC, NB-IoT, 5G mobile networks or Starlink network., or any other suitable mobile network. Each information processing device 100 has a unique device ID, for example, an International Mobile Equipment Identity (IMEI number), at least part of which is used to compose a Bluetooth ID for the information processing device 100. When the user registers the information processing device 100 using his external device with the server 401, the external device captures the Bluetooth ID broadcasted by the information processing device 100 and sends the IMEI or parts of the IMEI of the information processing within the Bluetooth ID to the server. The server keeps a database with registration passwords that correspond to the IMEI or parts of the IMEI of the information processing devices. Upon receiving the registration request from the external device, the server looks up for the matching registration password for the requesting information processing device and sends the registration password to the external device to complete the registration. User intervention is not required during the device registration process, thus saving the need for the user to manually enter the registration password. The automated registration process also improves the security of the whole registration process.

In addition, the wireless communication unit 101 may comprise a Bluetooth unit 121 configured to communicate with the external device via Bluetooth wireless protocol. In some examples, the wireless communication unit 101 is configured to authenticate communication with the external device in order to enable wireless communication with the external device via Bluetooth when the external device is within a predetermined distance of the information processing device 100. That is, as Bluetooth operates over a limited distance range, if the information processing device 100 is in the work mode and the external device is within Bluetooth communication range, then the user may initiate Bluetooth pairing via an application at the external device. In other examples, the information processing device may automatically initiate a Bluetooth pairing process with the external device if the Bluetooth unit 121 of the information processing device 100 detects that the external device is within Bluetooth communication range, provided that the information processing device 100 is in the work mode, or any other mode in which the Bluetooth functionality of the device is enabled. The information processing device 100 may scan for Bluetooth signal to automatically pair with the external device in a close range to initiate authentication or connection (if previously authenticated) with the external device.

As described above, the user may initiate a pairing process via an application of the external device. The external device transmits the pairing request, which is received by the Bluetooth unit 121 of the information processing device 100. In response to receiving the pairing request from the external device, the control unit 105 controls the wireless communication unit 101 to transmit an authentication notification to the server. The server receives the authentication notification, and determines whether to authenticate communication between the information processing device 100 and the external device. If the server authenticates communication between the external device and the information processing device 100, then the server transmits an acknowledgement notification to the information processing device 100. In response to receiving the acknowledgement notification from the server, the control unit 105 controls the wireless communication unit 101 to establish Bluetooth communication with the external device.

In some examples, upon authentication, the information processing device saves a copy of the authentication information such as the authorised external device ID locally. In situations when the server cannot be reached for authentication, for example due to signal failure, the device may automatically authenticate communication with an external device at a close range, based on the saved authentication information for a previously authenticated external device. The authentication may occur automatically once the external device is within Bluetooth communication range of the information processing device, or the authentication may occur in response to a Bluetooth pairing request from the external device.

In other examples, the wireless communication unit 101 may alternatively or additionally comprise means for communicating using other wireless connection techniques. For example, the wireless communication unit 101 may comprise a chipset that uses Near Field Communication (NFC) or Radio-Frequency Identification (RFID) technologies. Active or passive NFC units may be used. These wireless connection techniques do not require any manual pairing or device discovery like the Bluetooth but requires much closer communication range. When the user is within the range of the NFC unit comprised in the information processing device 100, the user may wake up the information processing device 100 by initiating an inductive coupling, for example, by tapping the external device on the information processing device 100 or the object comprising the information device.

The functionality of the information processing device 100 and its various functional units will now be described in more detail.

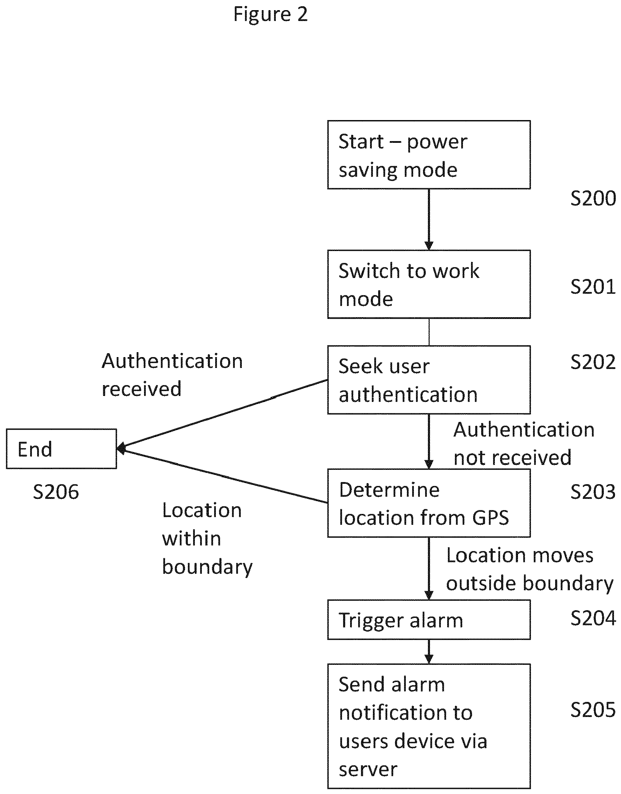

Figure 2 is a flow diagram illustrating the operation of the information processing device 100 in a theft-detection process. As described in more detail below, the information processing device may be operating the power saving mode, and switches to the work mode in the event that a movement of the information processing device 100 is detected by the vibration determination unit 103 determining that a vibration is detected.

In step S200 the device is operating in the power saving mode. As described in more detail below, the power saving mode may be enabled by the information processing device detecting that the external device, i.e. the user's mobile phone, is out of range of Bluetooth connectivity, or through an instruction input via an application of the external device.

In step S201, in response to the vibration determination unit 103 determining that a vibration is detected, the control unit 105 controls the information processing device 100 to switch from the power saving mode to the work mode. The condition for switching from the power saving mode to the work mode may also be dependent on one or more parameters. One such parameter may be a detected vibration level being higher than a pre-determined threshold. For example, when the vibration determination unit 103 senses a vibration level which is greater than the pre-determined threshold, the control unit is configured to switch the information processing device 100 to switch from the power saving mode to the work mode.

In some examples, the server may make a dynamic determination about whether or not to wake up the device as a result of detecting a vibration. For example, the user might have disabled vibration to wakeup function temporarily or completely, which also stops the information processing device 100 from detecting potential thefts. The configuration may be input by a user via an app at the external device and may be uploaded to a server 401. The server sets a flag (e.g. 0 or 1) for the on/off of the vibrate to wakeup function and may provide the setting to the information processing device via the mobile network. Accordingly, the control unit may determine whether to wake the device up or not based on the setting of the flag.

Switching to the work mode may also be made in response to detecting a vibration depending on a speed of travel of the information processing device. For example, when the information processing device 100 is attached to a bike 400, the GPS unit 102 may collect data such as locations, distance and speed of the user. The collected speed data may be used to determine whether the user is riding the bike at the time of the vibration. For example, if the speed data indicates that the speed is zero or the speed is increasing from zero when the vibration is detected, then the control unit may determine that the bike is being moved from a stationary position, in which case the device may move to work mode and wait to see if the location moves outside a predetermined location range. If the speed is above a threshold, it may be determined that the user is riding the bike and the device may stay in the power saving mode. The GPS locations may also be used to determine what terrain the user might be riding on. From the location information, if it is determined that the user is currently at a rough terrain, the control unit may dynamically adjust the threshold for switching from the power-saving mode to the work mode with anti-theft features.
The control unit 105 may also determine whether to switch to a work mode based on a duration of continuous vibration detected by the vibration determination unit 103. For example, the collected continuous vibration signal may be used to determine that the user is on a rough ground or the bike with the information processing device 100 is experiencing a strong wind. Therefore, the information processing device may remain in the power saving mode if the duration of continuous vibration is above a predetermined threshold.

The control unit may also determine whether to switch to a work mode based on whether or not a GPS signal is available. For example, when the GPS unit is switched on but there is no GPS signal available, the user might be using the information processing device 100 indoor. In the scenario when the information processing device 100 is attached to a bike, the bike may be located indoors, for example in the user's home where theft is unlikely to occur. Accordingly, it can be determined that any vibrations are not due to theft, and the device may stay in the power saving mode.

The information processing device may be configured to switch to the work mode from the power saving mode based on a previously detected continuous duration of no GPS signal. For example, when it is determined that there has been no GPS signal for a predetermined period, e.g. 30 seconds, the control unit 105 may switch off the GPS unit 102 to save power. Therefore, the status of the device may be set to being indoors, such that the control unit 105 controls the device to remain in the power saving mode if a vibration is detected.;

The control unit may also determine whether to switch to the work mode based on a a whether the information processing device 100 is falling or not. For example, the bike at which the information processing unit is installed might be falling due to a force such as a strong wind or an accident of the rider. In some examples, if the gyroscope is provided with power from the power supply unit in the power saving mode, then the control unit 105 may be configured to determine that the bike has fallen, and to control the information processing device to remain in the power saving mode. In other examples, the control unit may be configured to supply power to the gyroscope in response to a vibration being detected. If the gyroscope senses that the bike has fallen, then the control unit 104 may generate an alarm command in response to detecting a vibration.

In some examples the control unit may also determine whether to enter the work mode based on whether the information processing device 100 is within a range from a predetermined location (i.e. the geo-fence). For example, if the GPS unit is supplied with power in the power saving mode, then the control unit may be configured to stop the device from entering the work mode if the location is determined as being within the geo-fence.

These parameters can be used independently or together with other parameters and/or user's configuration in the application to determine the threshold for the mode switching. The condition for switching from between different modes is configured to reduce any unnecessary wakeups of the information processing devices entering the work mode.

In the work mode, the wireless communication unit 101 is supplied with power. In some examples, the GPS unit 102 is also supplied with power. The wireless communication unit and GPS unit can be controlled by the control unit 105 to perform their respective functions. In the case that the information processing device 100 is installed at an object such as a vehicle, and in particular a bike, the vibration determination unit 103 detects when the object is being moved from a parked position, for example. By turning on the location and transmission capabilities of the information processing device 100 in response to movement of the object being detected, a user can be notified of a potential theft of the object if it is moved outside of a range from a predetermined location, thus establishing a geo-fence for anti-theft purposes. The information processing device 100 may additionally be configured to determine whether the received vibration is due to other non-theft related reasons. For example, the bike at which the information processing unit is installed might be falling due to an accidental force such as a strong wind, in which situation the control unit 104 will not generate an alarm command. For example, a gryro-sensor may be configured to determine an orientation of the information processing device.

By maintaining power to the vibration determination unit 103 and control unit 105 but not the wireless communication unit 101 in power saving mode, the wireless communication unit 101 can be deactivated to reduce power consumption until their functions are required, such as in the example of a potential theft of the object, as described in more detail below. When powers supply is also switched off to the GPS unit 102 in the power saving mode, the power saving can be further improved.

In step S202, the information processing device 100 may be configured such that, in response to the information processing device 100 switching to the work mode from power saving mode after the vibration determination unit 103 determines that a vibration is detected, the control unit 105 is configured to control the wireless communication unit 101 to transmit an authentication request to the external device. For example, the wireless communication unit 101 may attempt to pair to the external device via Bluetooth communication protocol.

If the information processing device 100 receives an authentication notification, then the theft detection process ends, at step S206. In some examples, after ending the theft-detection process, the control unit 105 controls the information processing device 100 to remain in the work mode until a predetermined time has elapsed. For example, in response to the information processing device seeking authentication, the user may input an authentication response at the external device. In other examples, the authentication may be performed automatically if the Bluetooth unit detects that the external device is within Bluetooth communication range. After the predetermined time has elapsed without any further wireless communication from the external device or the server, the control unit 105 may control the information processing device 100 to return to the power saving mode.

If there is no response received at the information processing device 100 within a given time period of the detected vibration, for example because the external device is out of range of the Bluetooth unit 121, then it can be determined that the detected vibration of the information processing device 100 is not due to the user moving the object, but is due to an unauthorised movement of the object.

In step S203, in response to an authentication response not being received from the external device within a predetermined time period of the vibration being detected and the information processing device 100 switching to the work mode, the control unit 105 may be configured to control the GPS unit 102 to determine whether the position of the information processing device 100 moves outside of a predetermined radius. That is, if the object including the information processing device 100 is being stolen, then the GPS unit 102 determines when the information processing device 100 moves away from the location at which the object was left by the user.

If the GPS unit 102 determines that the location is within the predetermined radius, then it can be determined that the object is not being stolen. In this case, the process may proceed to step S206, and end the theft detection process. As described above, in some examples, after ending the theft-detection process, the control unit 105 controls the information processing device 100 to remain in the work mode until a predetermined time has elapsed. After the predetermined time has elapsed without any further wireless communication from the external device or the server, the control unit 105 may control the information processing device 100 to return to the power saving mode. In some examples, step S203 occurs before or during step S201.

However, if the GPS unit 102 determines that the position of the information processing device 100 has moved outside of the predetermined radius, then the process proceeds to step S204. At step S204, the control unit 105 is configured to generate an alarm command to cause an alarm to activate. For example, the information processing device 100 may be connected to a horn, and in response to receiving an alarm command from the information processing device 100, the horn may sound. In some examples, activating the alarm may cause the horn to release a sound of 100dB or greater. By activating the alarm, people in the vicinity are alerted that the object is being stolen.

In addition, at step S205, the information processing device 100 may be configured such that, in response to determining that the position of the information processing device 100 has moved outside of the predetermined radius, the control unit 105 is configured to control the wireless communication unit 101 to transmit an alarm notification to the external device. For example, the alarm notification may be transmitted over a mobile network to the external device via a server. For example, the mobile communication unit 111 is a GSM unit which transmits an alarm notification to a server via 2G mobile communication. In some examples, the control unit 105 is configured to hold the alarm command for a predetermined time period, for example, 20 seconds, before activating the alarm. The predetermined time period for holding the alarm command is also known as an alarm buffer, during which period the user is able to cancel the alarm command in response to the alarm notification. During the alarm buffer, a successful Bluetooth pairing with the external device may cancel the alarm. For example, the user might be able to do so by operating accordingly via an application in the external device. The alarm buffer enables the user to prevent any unwanted alarm from triggering.

If the alarm command is not cancelled during the buffer period, the server may update the status of the device to an "alarm" status. In response to the server receiving the alarm notification, it may transmit, by 2G mobile communication, to the external device (e.g., the user's mobile phone), an alarm notification to notify the user that the object is being stolen. The user may then take an appropriate action such as returning to the location of the object, or informing the relevant authorities that a theft has occurred. Due to the GPS unit 102 of the information processing device 100, the location of the object can then be tracked in order that the relevant authorities are able to locate the stolen object.

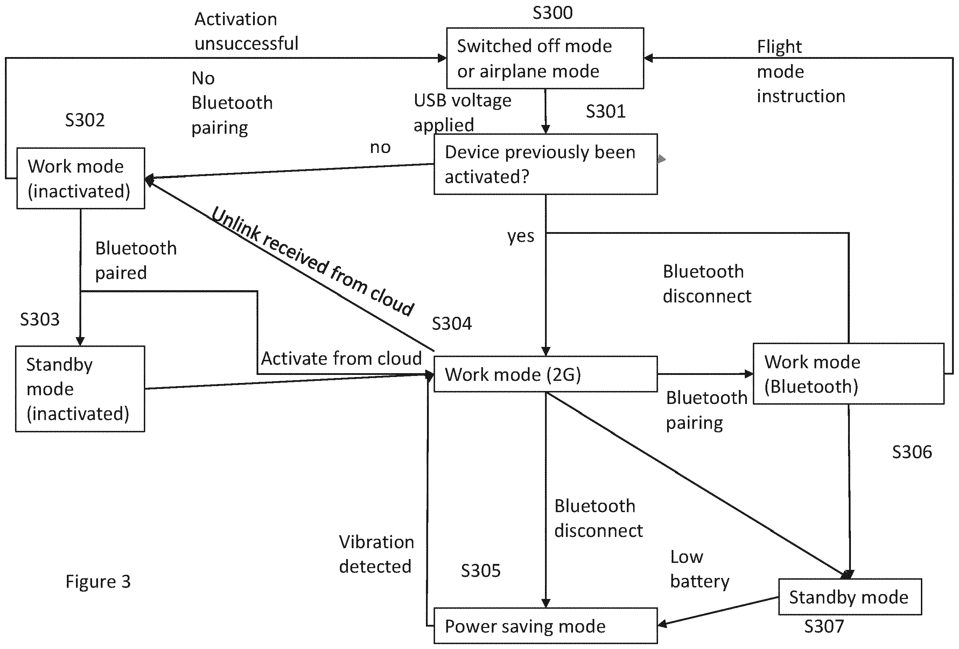

Figure 3 is a flow diagram illustrating the operation of the information processing device in its various different operation modes.

In step S300, the information processing 100 device is in a switched off mode which may also be referred to as an airplane mode. In the switched off mode, all the units of the information processing device 100 are switched off. In the airplane mode, the information processing device may be configured to have all the units completely switched off so that it is the same as the switched off mode. Alternatively, some units of the information processing device 100 may be configured to stay on in the airplane mode as will be explained in the following paragraphs.
To enter the airplane mode, the information processing device 100 may receive a switch off request from the external device. For example, the user may input an instruction to the external device for the information processing device 100 to enter an airplane mode. The instruction may be received via Bluetooth, for example. In other examples, the instruction may be received via the server over the mobile network. In response to receiving the switch off request from the external device, the control unit 105 controls the power input unit 104 to stop supply of power to all or some of the units of the information processing device 100, such that the information processing device 100 enters the airplane mode. That is, power is stopped from being supplied to all or some of the units in the information processing device 100. When the power to all the units in the information processing device 100 is stopped, the device is prevented from performing any functional operations. In particular, the device is prevented from performing any wireless communication operations and therefore can operate safely in a flight safe mode. By preventing power being supplied to the vibration determination unit 103, this prevents the device from entering the work mode in response to any detected vibrations due to movement of the object during a flight, for example.

In some examples, some units in the information processing device 100 might be configured to stay on in the airplane mode. For example, the vibration determination unit and the control unit may also be configured to stay on for sensing any vibrations received during the airplane mode. The vibrations may be saved locally within the information processing device 100, and may be uploaded to the server when the information processing device regains connectivity to the server. These vibration data maybe used in the future for studying of the vibration patterns during the airplane mode. For example, the vibration data maybe used to prove a damage to the information processing device 100 due to an external force and therefore may be used for insurance claim. However, the wireless communication unit is prevented from being switched on when in the airplane mode. That is, the device is prevented from entering a work mode from airplane mode until activation by an external voltage.

When in the airplane mode, the information processing device 100 can be switched on again by application of a voltage. When the information processing device 100 is in the switched off mode, the power input unit 104 is configured to generate a switch on signal in response to an applied voltage being above a predetermined voltage threshold. When the applied voltage is below a predetermined voltage threshold, switch on signal would not be triggered. In response to the switch on signal the power input unit 104 supplies power to the control unit 105, vibration determination unit 103, the wireless communication unit 101, and the GPS unit 102. Therefore, application of an external voltage above a threshold is required in order to switch the information processing device 100 back on. The power input unit 104 may be connected to a power source such as batteries. For example, the power source may comprise rechargeable batteries. The rechargeable batteries may be recharged by applying the external voltage. The external voltage may be applied through a USB port which is electrically connected to the batteries and/or the power input unit 104. Upon application of the external voltage through a USB port, the voltage threshold is overcome and the information processing device 100 switches into a work mode.

Because the information processing device 100 switches off responsive to wireless communication signals, is operated responsive to wireless communication signals, and switches on responsive to an electrical signal, the information processing device 100 can be entirely controlled through these mechanisms. Therefore, the information processing device and any object comprising the information processing device does not require any physical buttons. Accordingly, the information processing device 100 enables a buttonless design to be achieved. The buttonless design enables the information processing device to be sealed in a waterproof casing. In addition, the buttonless design may enable the whole device 100 to be hidden in various objects without being noticed as being an electronic device. For example, the information processing device 100 might be hidden in a water bottle cage attachable to a bike. Such arrangement would further enhance the anti-theft feature of the information processing device.

In some examples, the operation mode of the information processing device 100 on being switched on may depend on whether the information processing device has been previously associated with an external device by Bluetooth pairing. At step S301, if it is determined that the information processing device 100 has not been activated before, for example, the information processing device 100 is being switched on for the first time and is therefore not associated with an external device, then the process proceeds to step S302 and the information processing device enters an inactivated work mode (also refers to as a logistic mode). The information processing device 100 may also be in the inactivated work mode if it has been previously powered on but not linked with a user account. In the inactivated work mode, the information processing device 100 awaits a Bluetooth pairing request in order for the functionality of the information processing device 100 to be activated. While in the inactivated work mode, the batteries will be charged providing they remain connected to a power source.

Therefore, at step S302, if the information processing device 100 is being activated for the first time, the applied external voltage will cause the information processing device 100 to initiate Bluetooth pairing.

At step S303, although Bluetooth pairing has been successful, the device and user account are not yet activated. That is, the user account may require set up and initialisation via the server. Therefore, the information processing device can be said to be in an inactivated work mode. In the inactivated work mode, the control unit 105 is configured to control the power input unit 104 to supply power to the GPS unit 102, vibration determination unit 103, and the mobile communication unit 111. In the inactivated work mode therefore, the information processing device is capable of communicating with the server via the mobile network. After Bluetooth pairing is performed and the device has entered the inactivated work mode, the user may initiate activation at the external device.

The activation instructions may be transmitted from the external device to the information processing device 100 via the server over the mobile network. In some examples, if an activation instruction is not received by the mobile communication unit 111 of the information processing device 100 within a predetermined time period, then the control unit 105 is configured to cause the information processing device 100 to return to the switched off mode. In some examples, the information processing device may be configured to initialise activation by sending an activation request to the external device via the server. If an activation response is not received from the external device via the server within the predetermined time period, then the control unit 105 is configured to cause the information processing device 100 to return to the switched off mode.

At step S303, upon pairing with a Bluetooth device, the information processing device 100 may enter an inactivated standby mode if no further instructions or triggers are received. An example of the trigger could be a signal from the vibration determination unit 103 determining that a vibration is detected. In the inactivated standby mode, power is supplied to the control unit 105, and the control unit 105 controls the power input unit 104 to supply power to the Bluetooth unit 121 of the wireless communication unit 101. In the inactivated standby mode, power is not supplied to the GPS unit 102, vibration determination unit 103, or the mobile communication unit 111, for example. The control unit 105 may operate at a low frequency in order to conserve power.

In some examples, after the information processing device 100 is switched from the switched off mode to the inactivated work mode, the control unit 105 is configured to control the information processing device 100 to return back to the switched off mode if the information processing device 100 is not paired with an external device via Bluetooth within a predetermined time period. For example, the control unit 105 may be configured to control the information processing device 100 to return to the switched off mode if a time period of ten minutes elapses from switching from the switched off mode to the inactivated work mode without the information. However, it will be recognised that any other suitable time period threshold may be used.

In some examples, at step S304, in response to receiving an activation instruction at the mobile communication unit 111 of the information processing device 100, the control unit 105 may be configured to switch to an activated work mode. In some examples, the activated work mode may be a mobile communication mode over which communications with the external device are configured to be made via the mobile communication unit 111 of the information processing device 100. For example, in this mode, the mobile communication unit 111 may communicate with the server via the 2G mobile network. In the mobile communication mode, the control unit 105 is configured to control the power input unit 104 to supply power to the Bluetooth unit 121, the mobile communication unit 111, the GPS unit 102, and the vibration determination unit 103, as well as any other components of the information processing device 100, such that all components of the information processing device 100 are fully functional. As a result of successful activation, the information processing device 100 is linked with the external device, and communication between the information processing device via Bluetooth or via a mobile network over the server may be performed.

During activation, a user account may be created at the server, linking the user's external device with the information processing device 100. After activation, the information processing device may be configured to permit Bluetooth communications between the information processing device 100 and the external device. Activation may be unsuccessful if, for example, the information processing device 100 is registered at the server as being linked with an alternative external device.

The information processing device 100 may be returned to the inactivated work mode by receiving an unlink instruction from the server. In this case, the information processing device 100 returns to the inactivated work mode. For example, a first user (first owner) might resell the information device 100 to a second user. In this scenario, the first user might transmit a user switch request to the server to initiate the switch to a second user. The first user may additionally provide a form of identification information of the second user to the server (e.g. email, name, device ID, etc.) such that the server will recognise the second user upon his registration. The record of selling and reselling of the information processing device may also be recorded in the information processing device 100 and uploaded to the server, including information of the previous owners. In this mode, the information processing device can then await a Bluetooth pairing request from a different external device, such that different devices can be linked with the information processing device.

Switching to the inactivated work mode may also be temporary, which can be set up by the user. The user may choose to unlink with the information processing device 100 for a predetermined time such that the information processing device 100 maybe linked to different users. For example, the user might decide to lend the information processing device 100, or the object comprising the information processing device, to another user for a few days. In this scenario, the first user can send a temporary switch user request to the server and sets a duration of unlink of the user account. The user may similarly provide a form of identification information of the second user to the server. When the duration of unlink ends, the server will automatically unlink with the second user and re-link with the first user. By unlinking the first user account temporarily from the information processing device 100, data relating to the second user stored at the server would not be transmitted to the first user, thereby protecting the privacy of the second user. In this example, the server may store the user account details of the first user for the duration of unlink in order to easily re-link with the first user after the duration of unlink ends.

Returning to step S304, when the information processing device is operating in the mobile communication mode, if the information processing device 100 determines that the external device is out of Bluetooth range, then at step S305, the control unit 105 controls the information processing device to enter the power saving mode. In the power saving mode, the control unit stops supply of power to at least and the mobile communication unit 103. In some examples, power is still supplied to at least one of the Bluetooth unit 121 and the GPS unit 102. In the case that the Bluetooth unit still has power supplied, the device may be returned to the mobile communication mode by the Bluetooth unit 121 determining that the external device is within Bluetooth range. In addition, the information processing device 100 may be returned to the mobile communication mode by the vibration determination unit 103 determining that a vibration is detected.

In other examples, supply of power is also stopped to the Bluetooth unit 121. In this case, the information processing device 100 is returned to the mobile communication mode by the vibration determination unit 103 determining that a vibration is detected, as described in more detail with reference to Figure 2.

In the power saving mode, the control unit 105 may be configured to operate at a lower frequency in order to conserver power further.

In some examples, the information processing device 100 maybe configured to return from the power saving mode to the mobile communication mode on a schedule. For example, the control unit 105 may be configured to control the power input unit to supply power to the wireless communication unit 101 and GPS unit 102 every 12 hours. The information processing device may be configured to remain in the mobile communication mode for a predetermined time before returning back to the power saving mode. In some examples, the control unit 105 may be configured to cause the information processing device 100 to return to an activated work mode every 12 hours. However, it will be recognised that any suitable schedule may be used.

Returning again to step S304, when the information processing device 100 is operating in the mobile communication mode, if Bluetooth pairing occurs within a predetermined time of the information processing device entering the mobile communication mode, then the process proceeds to step S306, and the device is configured to enter a Bluetooth communication mode. The Bluetooth communication mode can also be considered to be an activated work mode, but in this case it is an activated work mode wherein, the information processing device 100 is capable of communicating with the external device over Bluetooth, and the mobile network capability is turned off. When in the Bluetooth communication mode, power is not supplied to the GPS unit 102, vibration determination unit 103, and mobile communication unit 111.

If the Bluetooth unit 121 determines that the external device is outside of Bluetooth communication range, then the control unit 105 controls the information processing device to return to the mobile communication mode, and the process may proceed from step S304 as described above.

When the information processing device is operating in the Bluetooth communication mode, the user may provide an instruction via Bluetooth for the information processing device to enter airplane mode. In this case, at step S300, supply of power is stopped to all components, and the device is completely switched off. On application of power via USB for example, because the information processing device 100 is already linked with an external device, on switching on, the process proceeds directly to step S304 and the information processing device 100 is configured to enter the mobile communication mode. That is, steps S301 to S303 can be skipped, because the information processing device 100 and external device are already linked.

If the alarm is activated, as described in more detail with reference to Figure 2, then the control unit 105 is configured to control the information processing device to remain in the either of the activated work modes, that is either of the mobile communication mode or Bluetooth communication mode. That is, if the object which comprises the information processing device is being stolen, then the mobile communication unit 111 or Bluetooth unit 121 are capable of transmitting updates to the external device such that the location can be tracked. Therefore, the process is prevented from proceeding from step S304 to step S305 and entering power saving mode in the case that a theft occurs. Once the alarm is deactivated, i.e. once the object has been retrieved, the process can then return to that illustrated in Figure 3.

In some examples, while the alarm is activated, the control unit 105 may be configured to cause the device to enter a standby mode based on the remaining battery life of the batteries connected to the power input unit. For example, if the battery gradually decreases to a predetermined threshold such, the control unit 105 is configured to control the information processing device to enter the standby mode. The predetermined threshold may be 15% or 30% or any suitable percentage. The control unit 105 may report to the external device that the information processing device 100 is entering standby mode and will report the end of anti-theft mode. In the standby mode, the Bluetooth unit may remain on, and the mobile communication unit may be switched off. The GPS unit may also be switched off in order to conserve power. The control unit may be configured to operate at a low frequency in the standby mode.

The standby mode can also be activated by instruction of the user at the external device. Alternatively and/or additionally, the standby mode can be activated on a schedule. That is, at specific times of the day, the control unit 105 may be configured to cause the information processing device 105 to enter the standby mode, such as overnight, for example. Alternatively and/or additionally, the standby mode may be entered automatically if the control unit 105 determines that the battery life is less than a predetermined threshold, for example 30%. However, it will be recognised that the predetermined threshold may be set to any other suitable level. In some examples, the standby mode is entered instead of the power saving mode. In the standby mode, the control unit 105 may be configured to cause the information processing device to enter an activated working mode on a schedule, for example, once every 24 hours, or according to any other suitable time schedule.

In the standby mode the vibration determination unit 103 may be switched on and the information processing device may return to one of the activated work modes on detecting a vibration. In the standby mode, the information processing device may operate independently without connecting to the external device via Bluetooth or via the server. The information processing device is configured to switch on, into an activated work mode, at a predetermined cycle in the standby mode, for example, every 12 hours, to report location and battery status to the server. In the standby mode, the Bluetooth unit stays on and the information processing device is configured to pair with the external device when it is detected to be in range. In the case of a theft, the location of the information processing device will therefore be updated at the server according to the wake up schedule of the information processing device.

In some examples, the information processing device may be configured to enter an ultra-low power saving mode in which supply of power is stopped to all units except for the control unit 105 which operates at a low frequency. In the ultra-low power saving mode the control unit 105 may be configured to cause the information processing device 100 to wake up, and enter one of the activated work modes on a set schedule, such as every 24 hours. However, it will be recognised that any suitable schedule may be set. Entry to the ultra-low power saving mode may be initiated via user instruction at the external device, where the instruction may be provided to the information processing device 100 via Bluetooth or over the mobile network. Bluetooth unit stays off in the power saving mode and a vibration is required to wake up the Bluetooth unit. Upon awakening the Bluetooth unit, the user needs to pair the external device with the information processing device within a predetermined time, for example, one minute, so as to avoid the alarm. Compared to the standby mode, the power is saved further in the power saving mode.

Alternatively/additionally, the control unit 105 controls the information processing device to enter the ultra-low power saving mode if it determines that the information processing device has not been operated in the mobile communication mode for a predetermined time. For example, the control unit 105 controls the information processing device to enter the ultra-low power saving mode if it determines that the information processing device has not been operated in the mobile communication mode for 2 days. However, it will be recognised that any suitable predetermined time may be set.

Alternatively/additionally, the control unit 105 controls the information processing device 100 to enter the ultra-low power saving mode if it determines that the remaining battery life is below a predetermined threshold. For example, the control unit 105 may control the information processing device to enter the ultra-low power saving mode if the battery life drops below 15%. However, it will be recognised that any suitable battery life threshold may be set.

In the ultra-low power saving mode, the information processing device 100 may be configured to be return to an activated work mode by application of an external voltage, e.g. via USB.

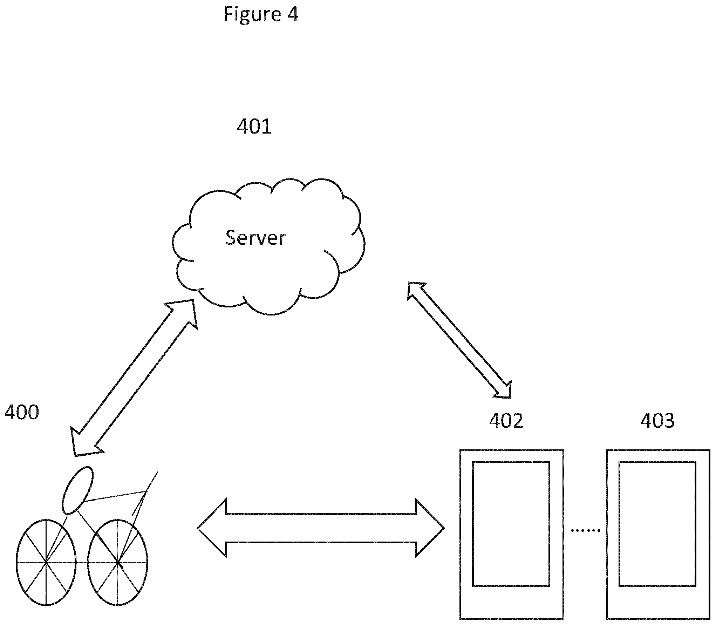

Figure 4 is a schematic illustration of an object 400 which comprises the information processing device 100 (not shown in Figure 4), the server 401, and one or more external devices 402, 403. As can be seen from Figure 4, wireless communication via a mobile network occurs between the server and each of the external device 402, 403 and information processing device 100 at the object 400. In addition, Bluetooth communication occurs directly between the external device 402 and the information processing device 100 at the object 400.

The information processing device 100 is configured to provide status updates to the server 401 at regular intervals. The status updates include, for example, the GPS location of the object 400, and the battery life of the information processing device 100. In addition, the information processing device may provide updates as to the operating mode of the information processing device 100. The server 401 may provide the status information to the external device 402 via the mobile network. In some examples, the status updates may be provided as push messages to the external device 402. In other examples, the external device may submit a request to the server for a status update, and the server may provide a response including the status update. The information processing device 100 may be configured to provide status updates at intervals of every 4 hours, for example. The intervals may depend on the operating mode of the information processing device 100. For example, in the case that the information processing device 100 is operating in the power saving mode, the information processing device 100 may provide status updates whenever the information processing device 100 wakes up from the power saving mode.

If the information processing device is operating in the mobile communication mode, then the control unit 105 may control the mobile communication unit 111 to periodically query the mobile network to check for network signal. If there is no signal, or the signal is weak, the mobile communication unit 111 repeatedly attempts to connect to the mobile network.

In the example of Figure 4, the object 400 which comprises the information processing device 100 is a bike. When the information processing device is operating in a work mode in which the Bluetooth unit 121 is turned on, such as the mobile communication mode or Bluetooth communication mode, then the user may initiate a Bluetooth pairing request at the external device as they approach the bike. The information processing device is then configured to perform an authentication processes as described above with reference to Figure 2. That is, the information processing device 100 transmits an authentication request to the server in response to receiving a Bluetooth pairing request. In response to receiving an authentication confirmation response from the server, Bluetooth communication between the information processing device 100 and the external device 402 is permitted. After authentication, the user is able to move the bike without triggering the alarm via the vibration sensor, and the user is able to ride the bike. The information processing device 100 may track the movement of the bike via the GPS sensor and upload the GPS data to the server. Accordingly, the information processing device 100 may function as a fitness and activity tracker, capable of tracking locations, distances, and speeds of the bike 400.

In the case that the user is parking the bike 400 and leaving it in a given location, the Bluetooth unit 121 may determine when the external device 402 leaves Bluetooth communication range. In this case, the information processing device 100 is configured to follow the steps of Figure 3, and enter the mobile communication mode, and after a predetermined time, to enter the power saving mode. The vibration determination unit 103 is left on in the power saving mode in order to detect unauthorised movement of the bike, as described in Figure 2. Accordingly, the information processing device 100 may function as an alternative to a physical bike lock. The user need only "lock" the device either via an app at the external device 402, or by detecting that Bluetooth is out of range. The device is then unlocked via the described authentication process, enabling the user to move the bike without triggering the alarm.

If the alarm is triggered, and the user determines for any reason that the alarm is a false alarm, then the user can cancel the alarm in response to receiving the alarm notification at the external device from the server 401. For example, the user may transport the object (for example, a bike) comprising the information processing device 100 in his car but forgets to disable the theft-detection mode. The vibration of driving may cause the control unit to switch to the work mode, and trigger an alarm. If the alarm command is received at the external device via the server, the user can therefore pull over from driving to cancel the alarm by sending a command via an application at the external device.

In other examples, the information processing device 100 may not be waken up by the received vibration signal if the control unit 105 determines that the vibration signal does not match the algorithm used to wake up the information processing device 100. In other words, the control unit may determine that the user is not riding the bike, for example based on the speed determined by the GPS unit if the GPS unit is switched on in the power saving mode.
In some examples, the user may have an accident and falls while riding the bike at which the information processing device 100 is attached. The vibration determination unit 103 may collect data via the G-sensor 106 and gyroscope 107 and the control unit may determine that the user has fallen based on the collected data. The information processing device 100 may transmit a signal to the server 401 and request an emergency contact of the user to be notified. This could be achieved by having the user fill in an emergency contact upon registration of a user account.

In some examples, the information processing device 100 maybe connected to a beeping device. The user may use the beeping device to locate the bike when they are in the vicinity of the bike. For example, the user may initiate a beep request at the external device. The beep request may be transmitted to the information processing device 100 via Bluetooth or via the mobile network. In response to receiving the beep request, the control unit 105 is configured to generate a beep instruction to cause the beeping device to activate. Accordingly, the beeping sound allows the user to locate the bike. The bike can then be unlocked by user authentication via the app.

In some examples the status update of the information processing device 100 to the server 401 may indicate that the battery drops below a predetermined threshold level. The server 401 may be configured to push a message to the external device to notify the user of the battery level. The user can then take appropriate action to charge the batteries in response to the notification. If the batteries are not charged within a predetermined time, then the device may enter the standby mode in order to further conserve power.

In some examples, the user may authorise an alternative user to use the bike 400 as described above in relation to Figure 3. In this case, the user provides authentication details of a different external device 403. The external device 403 of the alternative user is then able to pair via Bluetooth with the information processing device 100. Once the external device 403 of the alternative user is authorised, the information processing device 100 then operates as described with reference to Figures 2 and 3, but instead communicates with the external device of the alternative user 403.

Although various aspects of the invention are set out in the independent claims, other aspects of the invention comprise other combinations of features from the described embodiments and/or the dependent claims with the features of the independent claims and not solely the combinations explicitly set out in the claims.

It is noted herein that while the above describes various examples, these descriptions should not be viewed in a limiting sense. Rather, there are several variations and modifications which maybe made without departing from the scope of the present invention as defined in the appended claims.

## Claims

1. A vehicle tracking device comprising:
a wireless communication unit configured to wirelessly communicate with an external device;
a GPS unit configured to determine positional information of the vehicle tracking device;
a vibration determination unit configured to determine that a vibration is detected in response to receiving a signal corresponding to an external vibration;
a control unit configured to control the vehicle tracking device;
a power input unit configured to receive power from a power source and to supply power to each of the wireless communication unit, the GPS unit, the vibration determination unit, and the control unit;
wherein, in response to a switch off signal received via the wireless communication unit, the control unit controls the power input unit to enter a switched off mode and to switch off supply of power to at least the wireless communication unit; and
wherein when the vehicle tracking device is in the switched off state, in response to the power input unit receiving an applied voltage above a predetermined voltage threshold, the power input unit is configured to supply power to the wireless determination unit.

2. A vehicle tracking device according to claim 1, wherein in response to the applied voltage being above the predetermined voltage threshold, the power input unit is configured to further supply power to at least the wireless communication unit, and/or in response to the switch off signal, the control unit controls the power input unit to switch off supply to the GPS unit, the vibration unit and the control unit such that all the units of the vehicle tracking device are switched off.

3. A vehicle tracking device according to claim 1 or 2, wherein, in a power saving mode of the vehicle tracking device, the control unit controls the power input unit to supply power to at least the vibration determination unit and the control unit, and the control unit controls the power input unit to switch off supply of power to the wireless communication unit; and
wherein, in a work mode, the control unit controls the power input unit to supply power to at least the wireless communication unit and the control unit.

4. A vehicle tracking device according to claim 3, wherein, in the power saving mode, in response to the vibration determination unit determining that a vibration is detected, the control unit controls the vehicle tracking device to switch from the power saving mode to the work mode.

5. A vehicle tracking device according to claim 4, wherein, in response to the vehicle tracking device switching to the work mode after the vibration determination unit determined that a vibration is detected, the control unit is configured to control the wireless communication unit to transmit an authentication request to the external device.

6. A vehicle tracking device according to claim 5,
wherein the control unit controls the power input unit to supply power to the GPS unit, and
wherein, in response to an authentication response not being received from the external device within a predetermined time period, the control unit controls the GPS unit to determine whether the position of the vehicle tracking device moves outside of a predetermined radius, and
in response to determining that the position of the vehicle tracking device has moved outside of the predetermined radius, the control unit is configured to generate an alarm command to cause an alarm to activate, and optionally, in response to determining that the position of the vehicle tracking device has moved outside of the predetermined radius, the control unit is configured to control the wireless communication unit to transmit an alarm notification to the external device, via a server.

7. A vehicle tracking device according to any of claims 3 to 6, wherein in the power saving mode, the control unit controls the power supply unit to switch off supply of power to the GPS unit in response to the GPS unit receiving no GPS signal for a predetermined time threshold.

8. A vehicle tracking device according to any preceding claim, wherein the wireless communication unit comprises:
a mobile communication unit configured to wirelessly communicate with the external device via a server over a mobile network, and
a Bluetooth unit configured to authenticate communication with the external device and wirelessly communicate with the external device via Bluetooth when the external device is within a predetermined distance of the vehicle tracking device.

9. A vehicle tracking device according to claim 8, wherein, in the work mode:
in response to receiving a pairing request from the external device, the control unit controls the wireless communication unit to transmit an authentication notification to the server, and
in response to receiving an acknowledgement notification from the server, the control unit controls the wireless communication unit to establish Bluetooth communication with the external device; and/or
wherein, in a work mode in which the control unit controls the power input unit to supply power to at least the wireless communication unit and the control unit, in response to the Bluetooth unit determining that the external device is outside a predetermined range, the control unit is configured to control the vehicle tracking device to switch from the work mode to the power saving mode in which the control unit controls the power input unit to supply power to at least the vibration determination unit and the control unit, and the control unit controls the power input unit to switch off supply of power to the wireless communication unit.

10. A method of controlling a vehicle tracking device, the vehicle tracking device comprising a wireless communication unit configured to wirelessly communicate with an external device, a GPS unit configured to determine positional information of the vehicle tracking device, a vibration determination unit configured to determine that a vibration is detected in response to receiving a signal corresponding to an external vibration, a control unit for controlling the vehicle tracking device, and a power input unit configured to receive power from a power source and to supply power to each of the wireless communication unit, the GPS unit, the vibration determination unit, and the control unit, the method comprising:
receiving a switch off signal via a wireless communication unit;
controlling the vehicle tracking device to enter a switched off mode and to switch off supply of power to at least the wireless communication unit; and
receiving an applied voltage above a predetermined voltage threshold; and supplying power to the wireless determination unit in response to receiving the applied voltage.

11. A method according to claim 10, wherein in response to the applied voltage being above the predetermined voltage threshold, the power input unit is configured to further supply power to at least the wireless communication unit, and/or wherein, in response to the switch off signal, the control unit controls the power input unit to switch off supply to the GPS unit, the vibration unit and the control unit such that all the units of the vehicle tracking device are switched off.

12. A method according to claim 10 or 11, the method further comprising:
in a power saving mode of the vehicle tracking device:
controlling the power input unit to supply power to at least the vibration determination unit and the control unit; and
controlling the power input unit to switch off supply of power to the wireless communication unit; and
in a work mode of the vehicle tracking device:
controlling the power input unit to supply power to at least the wireless communication unit and the control unit.

13. A method according to claim 12, further comprising:
controlling the vehicle tracking device to switch to the work mode in response to the vibration determination unit determining that a vibration is detected; and
transmitting an authentication request to an external device in response to the vehicle tracking device switching to the work mode from the power saving mode.

14. The method of claim 13, further comprising:
determining, in response to an authentication response not being received from the external device within a predetermined time period, whether a position of the vehicle tracking device moves outside of a predetermined radius; and
generating, in response to determining that the position of the vehicle tracking device has moved outside of the predetermined radius, an alarm command to cause an alarm to activate; and,
transmitting an alarm notification to the external device via a server, in response to determining that the position of the vehicle tracking device has moved outside of the predetermined radius.

15. A method according to any of claims 12 to 14, further comprising:
wirelessly communicating with the external device via a server over a mobile network; and
authenticating communication with the external device via Bluetooth when the external device is within a predetermined distance of the vehicle tracking device.

16. A method according to claim 15, further comprising:
transmitting an authentication notification to the server in response to receiving a pairing request via Bluetooth from the external device;
receiving an acknowledgement notification from the server; and
establishing Bluetooth communication with the external device in response to receiving the acknowledgement notification; and/or
switching from the work mode to the power saving mode in response to determining that the external device is outside a predetermined range.
